# EUROPÄISCHE PATENTSCHRIFT

(11) **EP 1 143 210 B1**
(45) Veröffentlichungstag und Bekanntmachung des Hinweises auf die Patenterteilung: **07.09.2005**
(21) Anmeldenummer: 01105992.0
(22) Anmeldetag: 10.03.2001
(51) Int. Cl.: F25B 17/08, F25D 31/00

(54) **Sorptionskühler**
Sorption cooler
Refroidisseur à sorption

(30) Priorität: 03.04.2000 DE 10016352
(43) Veröffentlichungstag der Anmeldung: 10.10.2001
(73) Patentinhaber: ZEO-TECH Zeolith Technologie GmbH, 85716 Unterschleissheim (DE)
(72) Erfinder: Maier-Laxhuber, Peter, Dr., 85386 Dieterseheim (DE); Becky, Andreas, 85521 Ottobrunn (DE); Schmidt, Ralf, Dr., 85354 Freising (DE); Ammon, Maximilian, 91174 Spalt (DE); Wörz, Reiner, Dipl.-Ing., 85293 Reichertshausen (DE); Richter, Gert, 85716 Unterschleissheim (DE); Inselkammer, Jannik, Dr., 85521 Ottobrunn (DE); Rösler, Axel, Dr., 90478 Nürnberg (DE); Binnen, Manfred, 85221 Dachau (DE); Totschnig, Leo, Dipl.-Ing., 80939 München (DE); Leibhard, Martin, Dr., 82275 Emmering (DE)

(56) Entgegenhaltungen:
- EP-A- 1 054 222
- WO-A-92/02770
- WO-A-99/37958
- DE-A- 3 425 419
- DE-A- 3 604 910
- FR-A- 2 696 533
- GB-A- 2 329 459
- US-A- 5 154 067

## Beschreibung

Die Erfindung betrifft einen Sorptionskühler zum Kühlen eines Behälters mittels einer Sorptionsvorrichtung und ein Verfahren zur Regeneration des Sorptionsmittels gemäß dem Oberbegriff des Anspruchs 1.

Sorptionsvorrichtungen sind Apparate, in denen ein flüssiges oder festes Sorptionsmittel ein zweites, höher siedenderes Mittel, das Arbeitsmittel dampfförmig unter Wärmefreisetzung sorbiert (Sorption). Das Arbeitsmittel verdampft dabei in einem Verdampfer unter Wärmeaufnahme. Nachdem das Sorptionsmittel gesättigt ist, kann es durch Wärmezufuhr wieder desorbiert werden (Regeneration). Dabei dampft Arbeitsmittel aus dem Sorptionsmittel ab. Der Arbeitsmitteldampf kann rückverflüssigt werden und im Verdampfer anschließend erneut verdampfen.

Sorptionsvorrichtungen zum Kühlen mit festen Sorptionsmitteln sind aus der EP 0 368 111 und der DE-OS 34 25 419 bekannt. Sorptionsmittelbehälter, gefüllt mit Sorptionsinitteln saugen dabei Arbeitsmitteldampf, welcher in einem Verdampfer entsteht, ab und sorbieren ihn in der Sorptionsmittelfüllung unter Wärmefreisetzung. Die Sorptionswärme muss dabei aus der Sorptionsmittelfüllung abgeführt werden. Die Kühlapparate können zum Kühlen und Warmhalten von Lebensmitteln in thermisch isolierten Boxen eingesetzt werden.

Die US-A-5 154 067 offenbart einen portablen Kühler mit einem Sortionsmittel und einem Arbeitsmittel innerhalb eines einzigen evakuierten Behälters. Über eine außen anliegende Heizung kann das Sorptionsmittel desorbiert werden. Der Arbeitsmitteldampf verflüssigt sich an einer anderen Behälterwand, von der die Verflüssigungswärme abgeführt wird. Während der folgenden Sorption wird eben diese Wand zur Kühlung von Gegenständen genutzt. Zwischen Sorptionsmittel und Arbeitsmittel besteht kein Dampfventil mit welchem die Sorption für einen späteren Zeitraum unterbrochen werden kann.

Das aus der EP 0 368 111 bekannte Sorptionskühlsystem besteht aus einer transportablen Kühleinheit und einer davon separierbaren stationären Ladestation. Die Kühleinheit besteht aus einem Sorptionsbehälter, gefüllt mit einem festen Sorptionsmittel und einem Verdampfer, der flüssiges Arbeitsmittel und einen darin eingebetteten Wärmetauscher enthält. Verdampfer und Sorptionsbehälter sind über eine absperrbare Dampfleitung miteinander verbunden. Durch einen im Verdampfer eingebetteten Wärmetauscher fließen flüssige Medien, die durch temperaturgeregeltes Öffnen und Schließen der Absperreinrichtung auf das gewünschte Temperaturniveau gekühlt werden. Nachdem das Sorptionsmittel mit Arbeitsmittel gesättigt ist, kann es in der Ladestation erhitzt werden. Der dabei abströmende Arbeitsmitteldampf wird im Verdampfer rückverflüssigt. Die Kondensationswärme wird durch Kühlwasser, das durch den eingebetteten Wärmetauscher strömen muss, abgeführt.

Das Sorptionskühlsystem ist wegen des eingebetteten Wärmetauschers und der Temperaturregelung aufwendig in der Herstellung und in der praktischen Verwendung für den nicht eingewiesenen Laien kompliziert.

Aufgabe der Erfindung ist es, eine gegenüber dem Stand der Technik einfachere Handhabung und eine kostengünstige Vorrichtung aufzuzeigen.

Gelöst wird diese Aufgabe durch die kennzeichnenden Merkmale der Ansprüche 1 und 9. Die abhängigen Ansprüche zeigen weiterbildungen der erfinderischen Vorrichtung auf.

Ein erfindungsgemäßer Sorptionsapparat enthält demnach ein Sorptionsmittel innerhalb eines Sorptionsmittelbehälters, ein Dampfventil und flüssiges Arbeitsmittel, verteilt in einem arbeitsmittelspeicherndem Material innerhalb eines Verdampfers. Ein Teil der Außenwand des Behälters steht mit dem arbeitsmittelspeicherndem Material in gutem thermischen Kontakt und zumindest dieser Teil der Außenwand des Behälters ist zugleich Teil der Begrenzungsflächen des Verdampfers.

Das arbeitsmittelspeichernde Material enthält beispielsweise Glasfaser- oder Mineralfaserfliese und ist großflächig aufgeklebt oder aufgespannt. Bei zylindrisehnen Behältern genügt es in aller Regel die äußere Mantelfläche des Behälters zu beschichten. Eine Beschichtung der stärker gewölbten Boden- und Deckelelemente ist nicht nötig. Die Form des Behälters muss nicht auf die speziellen Erfordernisse der Sorptionstechnik angepasst werden. Vom arbeitsmittelspeichernden Material verdampft das Arbeitsmittel und kühlt durch die gut kontaktierte Behälterwand den Behälterinhalt.

Erfindungsgemäß hat ein weiterer Teil der Begrenzungsflächen des Verdampfers thermischen Kontakt zur Umgebung. An diesem Bereich kann Arbeitsmitteldampf kondensieren und seine Verflüssigungswärme an die Umgebung oder an ein äußeres Kühlmedium abgeben. Dies erfolgt immer dann, wenn die Umgebung oder das äußere Kühlmedium kälter sind als der Behälterinhalt. Arbeitsmittel verdampft dann aus dem arbeitsmittelspeicherndem Material unter Wärmeaufnahme und kondensiert unter Wärmeabgabe an die Umgebung. Durch diesen, auch als Heat-Pipe bekannten Effekt wird der Behälterinhalt immer auf die Umgebungstemperatur abgesenkt. Wenn die Umgebung jedoch wärmer als der Behälterinhalt ist, wird keine Wärme von außen nach innen übertragen, sofern die mit der Umgebung in Kontakt stehende Begrenzungsfläche frei von flüssigem Arbeitsmittel ist. Um dies sicher zu stellen, ist die Begrenzungsfläche so geneigt, dass das Kondensat abläuft und auf das arbeitsmittelspeichernde Material zurücktropfen kann. Von besonderem Vorteil ist dieser Heat-Pipe-Effekt immer dann, wenn durch Absenkung der Umbebungstemperatur der Behälterinhalt automatisch die tiefere Temperatur annehmen soll. Falls beispielsweise der Sorptionskühler in einen Kühlraum gestellt wird, fällt die Temperatur des Behälterinhalts auf das niedrigere Niveau; falls umgekehrt, beispielsweise durch Sonneneinstrahlung, die Außentemperaturen steigen, wirkt der erfindungsgemäße Aufbau des Sorptionskühlers wie ein unter Vakuum stehender Isolierbehälter. Der Anstieg der Behältertemperatur verläuft damit sehr viel langsamer als die Absenkung.

Auch während der Regenerationsphase, bei der das Sorptionsmittel vom Arbeitsmittel desorbiert wird, kann der Arbeitsmitteldampf an der mit der Umgebung in Kontakt stehenden Begrenzungsfläche des Verdampfers kondensieren. Dies erfolgt immer, wenn die Begrenzungsfläche kälter als der Behälterinhalt ist.

Vorteilhaft ist es auch, wenn ein weiterer Wandbereich des Verdampfers zugleich Bestandteil des Sorptionsmittelbehälters ist. Durch die dann mögliche Zusammenlegung von Zwischenwänden können Gewicht und Kosten eingespart werden. Dies gilt insbesondere auch dann, wenn in einer gemeinsamen Wand das Dampfventil angeordnet ist. Weitere Strömungskanäle und Verbindungselemente können dann eingespart werden.

Besonders kompakte und stabile Ausgestaltungen des Erfindungsgedankens erreicht man bei schalenförmigem Aufbau des Sorptionskühlers. Hierbei ist um den zylindrischen Behälter ein ebenfalls zylindrischer Verdampfermantel angeordnet und um diesen wiederum der zylindrische Sorptionsbehälter, der den Verdampfermantel zugleich als Innenwand nutzt. Um den thermischen Kontakt zwischen Sorptionsmittel und Verdampfer zu reduzieren, können innerhalb des Sorptionsmittelbehälters thermische Isoliermittel angeordnet sein.

Auf diese zusätzliche Isolierung kann aber verzichtet werden, wenn der Arbeitsmitteldampfdruck besonders niedrig ist. Bei niedrigen Dampfdrücken sind die leitenden und die konvektiven Wärmeübertragungsanteile reduziert. Bei der Verwendung des Stoffpaares Zeolith/Wasser liegt die erreichbare Isolierwirkung im Bereich von einfachen Vakuumisolierungen. Der dann noch relevante Strahlungsanteil kann durch den Einbau von Strahlungsschilden weiter reduziert werden. Besonders vorteilhaft ist es, wenn die gemeinsame Zwischenwand zwischen Verdampfer und Sorptionsmittelbehälter als Strahlungsschild wirkt.

Während der Regenerationsphase wird das Sorptionsmittel erhitzt und Arbeitsmitteldampf desorbiert. Dieser strömt durch das Dampfventil zum Verdampfer und kondensiert dort aus. Am Ende der Regeneration wird die Wärmezufuhr in das Sorptionsmittel unterbrochen. Die Desorption von weiterem Arbeitsmitteldampf endet damit. Das Dampfventil wird gesperrt. Das desorbierte Arbeitsmittel befindet sich in flüssiger Form im arbeitsmittelspeichernden Material. Das Sorptionsmittel kühlt sich im Anschluss bei unterbrochener Wärmezufuhr bis auf die Umgebungstemperatur durch Wärmeabgabe über die äußere Hülle des Sorptionsmittelbehälters ab.

Zur Einleitung der Kühlphase wird das Dampfventil geöffnet. Arbeitsmitteldampf kann nunmehr vom Verdampfer in den Sorptionsmittelbehälter strömen und vom Sorptionsmittel exotherm sorbiert werden. Die dampfende Arbeitsmittelmenge im Verdampfer kühlt sich und den Behälter samt dessen Inhalt ab. Um die maximale Kälteleistung zu erzeugen, muss das Sorptionsmittel seine Sorptionswärme abführen können. Eine besonders intensive Kühlwirkung erreicht man, wenn der Sorptionsmittelbehälter eine ausreichend große Wärmetauscherfläche an die ihn umgebende Luft aufweist. Vorteilhaft sollten die Behälterwände auf Temperaturen unter 50° C gekühlt werden. Im Verdampfer sind dann ausreichend tiefe Temperaturen möglich.

Falls der Behälter Flüssigkeiten enthält, wird nur das Flüssigkeitsvolumen, das sich um und unterhalb des arbeitsmittelspeichernden Materials befindet abgekühlt. Das darüber befindliche Volumen bleibt wegen der niedrigeren Dichte und der geringen Wärmeleitung der Flüssigkeiten nahe der Ausgangstemperatur. Durch geeignete Positionierung und Gestaltung des Verdampfers kann das zu kühlende Flüssigkeitsvolumen vorgewählt werden. In der Praxis erreicht man dadurch eine schnellere Abkühlung der unteren Flüssigkeitsmenge, die dann zuerst entnommen wird. Die obere Flüssigkeitsmenge wird erst gekühlt, wenn sie durch Entnahme der gekühlten Menge in den Bereich des Verdampfers absinkt.

Vor dem Neubefüllen eines Behälters wird er in der Regel gereinigt. Hierzu wird Reinigungs- und Spülflüssigkeit in den Behälter geleitet und in der Regel bei gekipptem Behälter wieder abgelassen. Der Verdampfer ist deshalb so gestaltet, dass der Behälter bei allen Reinigungsverfahren problemlos und ohne Spülmittelrückstände leer laufen kann.

Besonders vorteilhaft ist die Verwendung des Sorptionsstoffpaares Zeolith/Wasser. Zeolith ist ein kristallines Mineral, das aus einer regelmäßigen Gerüststruktur aus Silizium- und Aluminiumoxiden besteht. Diese Gerüststruktur enthält Hohlräume, in welchen Wassermoleküle unter Wärmefreisetzung sorbiert werden können. Innerhalb der Gerüststruktur sind die Wassermoleküle starken Feldkräften ausgesetzt, welche die Moleküle im Gitter verflüssigen und in einer flüssigkeitsähnlichen Phase binden. Die Stärke der auf die Wassermoleküle einwirkenden Bindungskräfte ist abhängig von der bereits in der Gerüststruktur enthaltenen Wassermenge und der Temperatur des Zeolithen. Für den praktischen Gebrauch können pro 100 Gramm Zeolith bis zu 25 Gramm Wasser sorbiert werden. Die damit bei der Verdampfung erzeugbare Kältemenge reicht aus um 1 Liter Wasser um ca. 14 Kelvin abzukühlen. Zeolithe sind feste Stoffe ohne störende Wärmeausdehnung bei der Sorptions- bzw. Desorptionsreaktion. Die Gerüststruktur ist von allen Seiten für die Wasserdampfmoleküle frei zugänglich. Die Apparate sind deshalb in jeder Lage einsatzfähig.

Die Verwendung von Wasser als Arbeitsmittel gestattet es, den erforderlichen Regelungsaufwand auf ein Minimum zu reduzieren. Beim Verdampfen von Wasser unter Vakuum kühlt sich die Wasseroberfläche auf 0°C ab und gefriert bei fortgesetzter Verdampfung zu Eis. Diese Eisschicht wächst schnell bis der entstehende Druckabfall durch die Eisschicht das Wachstum reduziert. Die Eisschicht kann vorteilhaft zur Regelung der Flüssigkeitstemperatur benutzt werden. Bei geringer Wärmezufuhr aus dem Behälter wächst die Eisschicht, bei sehr großer schmilzt sie ab. Durch die natürliche Eisbildung wird die Wärmeübertragung von der Flüssigkeit in den Verdampfer reduziert, so dass die Flüssigkeit nicht unter 0°C abkühlt und im Regelfall bei 4 bis 5°C verbleibt.

Dem wässrigen Arbeitsmittel können auch den Gefrierpunkt absenkende Stoffe beigemischt sein, wenn die Entnahmetemperatur der Flüssigkeit unter 4°C abgesenkt werden soll.

Verwendbar sind jedoch auch andere Sorptionsmittelpaarungen, bei denen das Sorptionsmittel fest ist und auch bei der Sorptionsreaktion fest bleibt. Feste Sorptionsmittel haben eine geringe Wärmeleitung und einen schlechten Wärmeübergang. Da auch der Wärmeübergang von gasförmigen Medien (Luft, Abgase) auf den Sorptionsmittelbehälter in der gleichen Größenordnung liegt, empfehlen sich prinzipiell Wärmetauscher ohne Berippung, wie beispielsweise Zylinder- oder Rohrgeometrien.

Einige feste Sorptionsmittel, wie Zeolithe, sind stabil genug um auch äußere Überdrücke auf dünnwandige Behälterwände zu kompensieren. Zusätzliche Versteifungen oder dickwandige Wärmetauscherflächen sind deshalb nicht nötig. Da bei der Verwendung von Wasser als Arbeitsmittel der Sorptionsapparat unter Vakuum steht und für die gesamte Funktionsdauer keine Gase in das System eindringen sollten, sind für das Dampfventil vakuumdichte Bauteile zu bevorzugen. Für die manuelle Betätigung haben sich Durchführungen, die mittels Metallbälgen abgedichtet sind, bewährt.

Das Dampfventil wird durch eine Hebelvorrichtung betätigt, deren erstes Hebelende fest mit der Verdampfer- bzw. Sorptionsbehälter-Außenwand verbunden ist und deren zweites Hebelende das Ventil betätigt. Durch Verformen der Außenwand an der Stelle des ersten Hebelendes kann die Absperrvorrichtung erfindungsgemäß ohne teure Vakuumdurchführung betätigt werden.

Für eine wirtschaftliche Betriebsweise sind Sorptionsmitteltemperaturen von 250 bis 350° C bei der Regeneration und von 40 bis 80° C bei der Sorption empfehlenswert. Da insbesondere Zeolithgranulate eine geringe Wärmeleitung haben, sind die Sorptionsbehälter so auszulegen, dass der Wärmeleitungsweg für die umgesetzten Wärmemengen 18 mm nicht übersteigt. Als Wärmequellen für die Regeneration sind alle bekannten Vorrichtungen geeignet, die das erforderliche Temperaturniveau erreichen und den Behälterinhalt nicht unnötig erwärmen. Vorteilhaft sind elektrisch beheizte Platten oder Hüllen, die der Geometrie der Sorptionsmittelbehälter angepasst sind. Die Heizung kann z. B. auch für mehrere Sorptionskühler in einer Palette angeordnet sein, um produktionsbedingte Wartezeiten nach dem Befüllen der Behälter für die Regeneration zu nutzen. Vorteilhaft sind auch Heizvorrichtungen, die über Strahlungs- oder Induktionswärme (Wirbelströme) die Sorptionsmittelfüllung erhitzen. Selbstverständlich ist es auch möglich, die Heizvorrichtung mit dem Sorptionsbehälter dauerhaft zu verbinden und auch beim Transport mobiler Sorptionskühler an diesem zu belassen.

Besonders vorteilhaft ist die Regeneration in einem Heißluftofen bei einer Lufttemperatur von über 300° C. Falls die Zeolithfüllung in einer dünnen Schicht auf der Innenseite des Außenmantels angeordnet ist, kann die Regeneration innerhalb einer Stunde abgeschlossen sein. Auch bei der Regeneration im Umluftofen schützt die Vakuumisolierung die Flüssigkeit vor einer unerwünschten Erwärmung.

Während der Kühlphase kann sich die Oberfläche des Sorptionsmittelbehälters auf Temperaturen von über 100° C erwärmen. Für diesen Fall sind geeignete Maßnahmen zum Schutz vor Verbrennungen vorzusehen. Bewährt haben sich Oberflächenbeschichtungen aus Papier und Fasermaterialien, die auch bei höheren Temperaturen vor Verbrennungen schützen. Falls diese Beschichtungen befeuchtet werden, ist gleichzeitig durch die einhergehende Verdunstungskühlung eine größere Kühlleistung am Behälter möglich.

Vorteilhaft sind auch engmaschige Oberflächenschutznetze, die eine Berührung mit der heißen Sorptionsbehälterwand verhindern. Schutznetze und Schrumpffolien aus Kunststoff passen sich optimal auch bauchigen Oberflächenformen an und bieten zugleich Schutz vor mechanischen Beschädigungen.

An die Größe und die Geometrie der Behälter werden keine besonderen Anforderungen gestellt. Somit sind alle heute üblichen Behältnisse (z.B. Fässer, Container, Dosen, offene Behälter, Foliensäcke, Mehrschichtverpackungen, Kunststoffbehälter, Kanister, Hoboks, Flaschen, Kannen usw.) für fließfähige Füllgüter geeignet, sofern sich der Sorptionsapparat funktionsgerecht ankoppeln lässt. Längliche Geometrien mit kleinen Durchmessern sind flachen Formen mit großen Durchmessern vorzuziehen, da erstere eine schnellere Abkühlung des Inhalts erlauben.

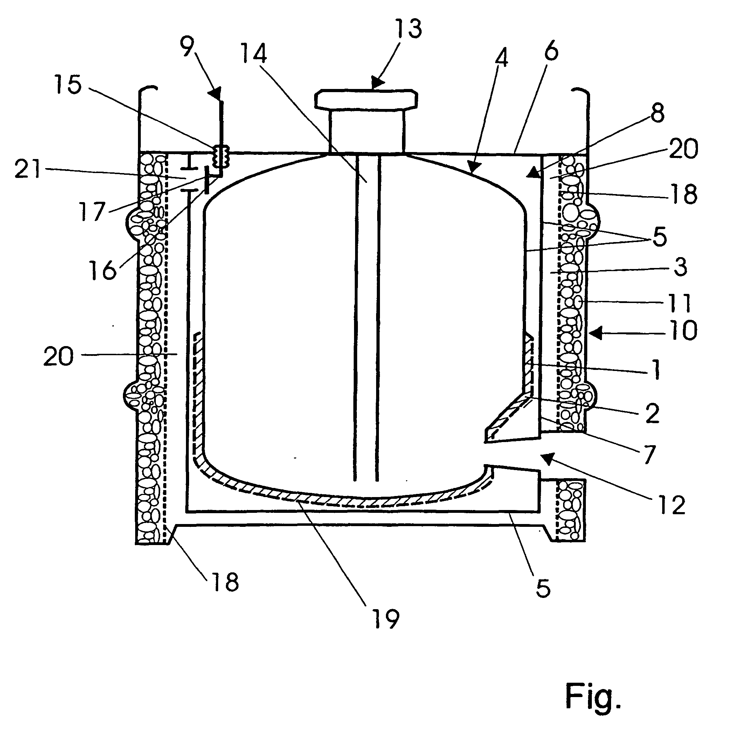

In der Zeichnung ist ein erfindungsgemäßer Sorptionskühler in der Ausgestaltung eines Getränkefasses im Schnitt dargestellt.

Im unteren Auslauf eines zylindrischen Behälters 4 befindet sich eine Zapföffnung 12 über die der flüssige Fassinhalt gekühlt entnommen werden kann. Im oberen Bereich hat der Behälter 4 einen Fitting 13 mit einem bis zum Behälterboden reichenden Steigrohr 14. Über beide wird das Getränkefass nach den bekannten Methoden gereinigt und gefüllt, ohne dass dabei die Sorptionstechnik besonderer Berücksichtigung bedarf. Der Verdampfer 8 umhüllt den kompletten Behälter 4 ohne den Bereich des Fittings 13. Der abgeschlossene, zylindrische Verdampfungsraum wird durch Teile der Außenwand 1 des Behälters 4 und der Begrenzungsflächen 5 sowie einem Teil der äußeren Hülle 6 des Sorptionskühlers und einem weiteren Wandbereich 7 gebildet. Durch diese Bauform wird der Sorptionskühler kompakt, kostengünstig und leicht. Der Wandbereich 7 ist zugleich Bestandteil eines ebenfalls zylindrischen Sorptionsmittelbehälters 10. Gleichzeitig fungiert er auch als Strahlungsschild zwischen dem Sorptionsmittel 11 und dem Behälter 4.

Ein arbeitsmittelspeicherndes Material 2 ist an der unteren Außenwand 1 des Behälters 4 mittels eines Metallgitters 19 fixiert. Das arbeitsmittelspeichernde Material 2 besteht aus einer saugfähigen Glasfasermatte, die durch ihre hygroskopische Wirkung das Arbeitsmittel Wasser im Bereich der Außenwand 1 des Behälters 4 gleichmäßig verteilt.

Das Sorptionsmittel 11 ist mantelförmig auf der Innenseite der äußeren Hülle des Sorptionsmittelbehälters 10 durch ein zylindrisches Lochgitter 18 fixiert. Zwischen diesem und dem Wandbereich 7 befindet sich ein Ringspalt 20, der sich auch über den Bodenbereich erstreckt und zugleich als Vakuumisolation und Dampfverteiler fungiert.

Ein Dampfventil 9 sitzt an einer Öffnung zum Sorptionsmittelbehälter 10. Es enthält einen Metallbalg 15, über den ein von außen betätigbares Gestänge 16 einen Ventilteller 17 öffnen und schließen kann. Das Gestänge 16 ist dabei so eingestellt, dass bei nicht ausgelenktem Metallbalg 15 der Ventilteller 17 auf die Öffnung gedrückt wird. Eine Rückströmung von Wasserdampf aus dem Verdampfer 8 in den Sorptionsmittelbehälter 10 ist solange unterbunden, bis der Metallbalg 15 ausgelenkt und der Ventilteller 17 abgehoben wird. Während der Regenerationsphase, in der Wasserdampf in den Verdampfer 8 zurückströmt, gibt der Ventilteller 17 der Dampfströmung selbsttätig den Weg frei.

Die Sorptionskühler werden nach dem Neubefüllen mit Getränken durch Erhitzen des Sorptionsmittels regeneriert. Der beim Erhitzen desorbierte Wasserdampf strömt durch den sich öffnenden Ventilteller 17 in den Verdampfer 8 und kondensiert an den Wänden des Behälters 4. Die Getränke nehmen die Kondensationswärme auf und erwärmen sich. Die Erwärmung ist etwa so groß wie die später erfolgende Abkühlung, in der Regel also ca. 20 bis 25 Kelvin.

Bier wird beispielsweise bei relativ niedrigen Temperaturen von 4 bis 5°C abgefüllt. Die anschließende Erwärmung durch den Regenerationsprozeß entspricht also der ohnehin während der Lagerzeit erfolgenden Erwärmung auf Umgebungstemperatur.

Zum Starten des Sorptionsprozesses wird das Gestänge 16 ausgelenkt und festgesetzt. Vom Verdampfer 8 strömt Wasserdampf zum Sorptionsmittel 11. Die Getränke kühlen sich an der Behälterwand 1, die mit dem arbeitsmittelspeichernden Material 2 belegt ist, ab. Die Abkühlraten für Getränke liegen bei ca. 0,5 bis 1 K/min, d.h. etwa 30 Minuten nach dem Öffnen des Ventiltellers 17 kann das erste Glas mit ca. 5 °C gezapft werden. Innerhalb von weiteren 2 Stunden lässt sich die restliche Füllung gekühlt entnehmen.

## Patentansprüche

1. Sorptionskühler zur Kühlung von Substanzen in einem Behälter (4) mittels eines Sorptionsmittels (11) innerhalb eines Sorptionsmittelbehälters (10), der über ein Dampfventil (9) mit einem Verdampfer (8) für die Erzeugung von Arbeitsmitteldampf verbunden ist, und bei welchem ein Teil der Außenwand (1) des Behälters (4) mit einem arbeitsmittelspeichernden Material (2) in gutem thermischen Kontakt steht und zumindest dieser Teil der Außenwand (1) des Behälters (4) zugleich Teil der Begrenzungsflächen (5) des Verdampfers (8) ist,
**dadurch gekennzeichnet, dass**
ein weiterer Teil der Begrenzungsflächen (5) des Verdampfers (8) Teil der Hülle (6) des Sorptionskühlers ist und an diesem Teil der Hülle (6) Arbeitsmitteldampf unter Abgabe von Verflüssigungswärme kondensieren kann.

2. Sorptionskühler nach einem der vorangehenden Ansprüche,
**dadurch gekennzeichnet, dass**
ein weiterer Wandbereich (7) des Verdampfers (8) zugleich Bestandteil des Sorptionsmittelbehälters (10) ist.

3. Sorptionskühler nach einem der vorangehenden Ansprüche,
**dadurch gekennzeichnet, dass**
sowohl der Verdampfer (8) als auch der Sorptionsmittelbehälter (10) schalenförmig um den Behälter (4) angeordnet sind.

4. Sorptionskühler nach einem der vorangehenden Ansprüche,
**dadurch gekennzeichnet, dass**
zwischen dem Behälter (4) und dem Sorptionsmittelbehälter (10) eine Vakuumisolierung (3) angeordnet ist, die Arbeitsmitteldampf enthält.

5. Sorptionskühler nach einem der vorangehenden Ansprüche,
**dadurch gekennzeichnet, dass**
zwischen Sorptionsmittelbehälter (10) und dem Behälter (4) ein Strahlungsschild angeordnet ist.

6. Sorptionskühler nach einem der vorangehenden Ansprüche,
**dadurch gekennzeichnet, dass**
das Sorptionsmittel (11) Zeolith enthält und die Schichtdicke auf der Innenseite der Außenwand des Sorptionsmittelbehälters (10) weniger als 18 mm beträgt.

7. Sorptionskühler nach einem der vorangehenden Ansprüche,
**dadurch gekennzeichnet, dass**
das Dampfventil (9) ein Rückschlagventil ist, das den Arbeitsmitteldampf auch bei geschlossener Ventilstellung vom Sorptionsmittel (11) zum Verdampfer (8) strömen lässt.

8. Sorptionskühler nach einem der vorangehenden Ansprüche,
**dadurch gekennzeichnet, dass**
die Außenwand des Sorptionsmittelbehälters (10) während der Sorptionsphase mit einem Berührungsschutz versehen ist.

9. Verfahren zur Desorption eines Sorptionskühlers nach einem der vorangehenden Ansprüche,
**dadurch gekennzeichnet, dass**
die Außenwände des Sorptionsmittelbehälters (10) in einem Heißluftofen Temperaturen von 250 bis 350° C ausgesetzt werden und dabei temperaturempfindliche Teile des Sorptionskühlers abgedeckt sind um sie vor Überhitzung zu schützen.

## Claims

1. Sorption cooler for cooling substances in a vessel (4) by means of a sorption agent (11) within a sorption agent vessel (10), which is connected via a vapour valve (9) to an evaporator (8) for the generation of working agent vapour, and in which a part of the outer wall (1) of the vessel (4) is in good thermal contact with a working agent storage material (2) and at least this part of the outer wall (1) of the vessel (4) is at the same time part of the boundary surfaces (5) of the evaporator (8), **characterised in that** a further part of the boundary surfaces (5) of the evaporator (8) is a part of the casing (6) of the sorption cooler and working agent vapour can condense on this part of the casing (6) with release of condensation heat.

2. Sorption cooler according to any one of the preceding claims, **characterised in that** a further wall region (7) of the evaporator (8) is at the same time a component of the sorption agent vessel (10).

3. Sorption cooler according to any one of the preceding claims, **characterised in that** both the evaporator (8) and the sorption agent vessel (10) are arranged in a shell-like manner around the vessel (4).

4. Sorption cooler according to any one of the preceding claims, **characterised in that** a vacuum insulation (3) containing working agent vapour is arranged between the vessel (4) and the sorption agent vessel (10).

5. Sorption cooler according to any one of the preceding claims, **characterised in that** a radiation shield is arranged between the sorption agent vessel (10) and the vessel (4).

6. Sorption cooler according to any one of the preceding claims, **characterised in that** the sorption agent (11) contains zeolite and the layer thickness on the inner side of the outer wall of the sorption agent vessel (10) is less than 18 mm.

7. Sorption cooler according to any one of the preceding claims, **characterised in that** the vapour valve (9) is a non-return valve which allows the working agent vapour to flow from the sorption agent (11) to the evaporator (8) even with the valve setting closed.

8. Sorption cooler according to any one of the preceding claims, **characterised in that** the outer wall of the sorption agent vessel (10) is provided with contact protection during the sorption phase.

9. Method for the desorption of a sorption cooler according to any one of the preceding claims, **characterised in that** the outer walls of the sorption agent vessel (10) are exposed to temperatures of 250 to 350°C in a hot air oven and in the process temperature-sensitive parts of the sorption cooler are covered in order to protect them from overheating.

## Revendications

1. Dispositif à sorption de refroidissement de substances dans un récipient (4) au moyen d'un agent (11) de sorption à l'intérieur d'une cuve (10) d'agent de sorption, qui communique par une vanne (9) pour de la vapeur avec un évaporateur (8) pour la production de vapeur servant de fluide de travail et dans lequel une partie de la paroi (1) extérieure du récipient (4) est en bon contact thermique avec un matériau (2) emmagasinant du fluide de travail et au moins cette partie de la paroi (1) extérieure du récipient (4) fait partie en même temps de surfaces (5) de délimitation de l'évaporateur (8),
**caractérisé en ce que**
une autre partie des surfaces (5) de délimitation de l'évaporateur (8) fait partie de l'enveloppe (6) du dispositif de refroidissement à sorption et sur cette partie de l'enveloppe (6) de la vapeur servant de fluide de travail peut se condenser en dégageant de la chaleur de liquéfaction.

2. Dispositif de refroidissement à sorption suivant la revendication 1, **caractérisé en ce qu'**une autre partie (7) de paroi de l'évaporateur (8) fait en même partie de la cuve (10) d'agent de sorption.

3. Dispositif de refroidissement à sorption suivant l'une des revendications précédentes, **caractérisé en ce que** tant l'évaporateur (8) que la cuve (10) d'agent de sorption sont disposés en forme de cuvette autour du récipient (4).

4. Dispositif de refroidissement à sorption suivant l'une des revendications précédentes, **caractérisé en ce qu'**il est disposé entre le récipient (4) et la cuve (10) d'agent de sorption un isolant (3) au vide qui contient de la vapeur servant de fluide de travail.

5. Dispositif de refroidissement à sorption suivant l'une des revendications précédentes, **caractérisé en ce qu'**un écran aux rayonnements est interposé entre la cuve (10) d'agent de sorption et le récipient (4).

6. Dispositif de refroidissement à sorption suivant l'une des revendications précédentes, **caractérisé en ce que** l'agent (11) de sorption contient du zéolithe et l'épaisseur de couche sur la face intérieure de la paroi extérieure de la cuve (10) d'agent de sorption est inférieure à 18 mm.

7. Dispositif de refroidissement à sorption suivant l'une des revendications précédentes, **caractérisé en ce que** la vanne (9) à vapeur est un clapet antiretour qui laisse passer la vapeur servant de fluide de travail de l'agent (11) de sorption à l'évaporateur (8), même en position fermée de la vanne.

8. Dispositif de refroidissement à sorption suivant l'une des revendications précédentes, **caractérisé en ce que** la paroi extérieure de la cuve (10) d'agent de sorption est munie pendant la phase de sorption d'une protection vis-à-vis d'un contact.

9. Procédé de désorption d'un dispositif de refroidissement à sorption suivant l'une des revendications précédentes, **caractérisé en ce que** l'on soumet les parois extérieures de la cuve (10) de sorption dans un four à air chaud à des températures de 250 à 350°C et on recouvre des parties sensibles à la température du dispositif de refroidissement à sorption pour les protéger de la surchauffe.
